# FASCICULE DE BREVET EUROPEEN

(11) **EP 3 649 014 B1**
(45) Date de publication et mention de la délivrance du brevet: **17.03.2021**
(21) Numéro de dépôt: 18735682.9
(22) Date de dépôt: 15.06.2018
(51) Int. Cl.: B60Q 1/48, G01C 21/36, G08B 5/22

(54) **PROCÉDÉ ET DISPOSITIF DE GUIDAGE D'UNE PERSONNE VERS UN VÉHICULE RÉSERVÉ**
VERFAHREN UND VORRICHTUNG ZUM LEITEN EINER PERSON ZU EINEM RESERVIERTEN FAHRZEUG
METHOD AND DEVICE FOR GUIDING A PERSON TO A RESERVED VEHICLE

(30) Priorité: 03.07.2017 FR 1756244
(43) Date de publication de la demande: 13.05.2020
(73) Titulaire: PSA Automobiles SA, 78300 Poissy (FR)
(72) Inventeur: SEVILLON, Yohan, 35000 Rennes (FR); MASSON, John, 78990 Elancourt (FR); GOMEZ, Raphael, 94490 Ormesson Sur Marne (FR); DUBARRY, Christophe, 91620 Nozay (FR); DELENNE, Sandrine, 91120 Palaiseau (FR)
(86) Numéro de dépôt international: PCT/FR2018/051433
(87) Numéro de publication internationale: WO 2019/008245

(56) Documents cités:
- EP-A1- 2 418 461
- US-A1- 2008 318 598
- US-A1- 2017 021 760

## Description

L'invention concerne les véhicules, éventuellement de type automobile, et pouvant être réservés, et plus précisément la récupération de tels véhicules sur leurs emplacements de stationnement une fois qu'ils ont été réservés.

Dans ce qui suit, on entend par « véhicule » aussi bien un véhicule de location qu'un véhicule partagé.

Lorsqu'une personne a réservé un véhicule (de location ou partagé) qui est garé dans une zone de stationnement, comme par exemple un parking (extérieur ou intérieur), et dont elle connait la marque, le modèle et la couleur de la carrosserie, sa récupération peut s'avérer difficile et/ou chronophage lorsque la zone de stationnement est de grandes dimensions et/ou que le nombre de véhicules similaires à celui réservé est important.

Lorsque cette personne dispose déjà du dispositif électronique portable contrôlant l'accès au véhicule réservé (« smart key » ou « plip »), elle peut actionner à distance une touche qui va déclencher l'allumage pendant une courte durée des feux de détresse ou des feux de position ou de croisement. Cependant, lorsque la zone de stationnement est de grandes dimensions et/ou comprend de nombreux véhicules, le repérage des feux allumés peut s'avérer difficile, voire impossible. De plus, il arrive fréquemment que dans une zone de stationnement telle qu'un parking d'aéroport ou de gare, plusieurs personnes ayant réservées des véhicules déclenchent sensiblement en même temps l'allumage de feux, si bien qu'il devient impossible à chaque personne de repérer le véhicule qu'elle a réservé.

Par ailleurs, lorsque cette personne a effectué sa réservation à distance auprès d'un site de réservation, par exemple via l'Internet, elle ne dispose que d'une carte ou d'un badge électronique transmis(e) par courrier et destiné(e) à déverrouiller le véhicule réservé une fois placé(e) à proximité immédiate de ce dernier, car le dispositif électronique portable contrôlant l'accès au véhicule réservé est logé dans ce dernier (par exemple dans la boîte à gants). Par conséquent, la personne ne peut même pas déclencher l'allumage de feux pour espérer le repérer à distance.

Afin d'améliorer le repérage d'un véhicule réservé, il a été proposé, notamment dans le document brevet US 2016/082880, d'équiper un véhicule réservé d'au moins une source de lumière installée à l'extérieur et l'équipement de communication mobile de la personne ayant réservé ce véhicule d'une application de déclenchement chargée de contrôler le déclenchement à distance de la production d'une lumière de signalement prédéfinie par cette source de lumière lorsque la distance entre ce véhicule réservé et cet équipement de communication est inférieure à un seuil prédéfini.

Cependant, lorsque la zone de stationnement est de grandes dimensions et/ou comprend de nombreux véhicules le repérage de la lumière de signalement demeure difficile, voire impossible, en particulier lorsque l'émission de cette lumière de signalement ne dure pas longtemps et/ou lorsque le parking comprend plusieurs niveaux et/ou des parois verticales définissant des séparations entre sous-zones. De plus, il peut arriver que dans une zone de stationnement plusieurs personnes déclenchent sensiblement en même temps l'émission de lumières de signalement par leurs véhicules respectifs, si bien qu'il devient difficile pour chaque personne de différencier les différentes lumières de signalement et donc de repérer le véhicule qu'elle a réservé.

En outre, les documents US 2008/0318598 A1 et EP 2 418 461 A1 divulguent des procédés de guidage d'une personne vers un véhicule garé à l'aide d'un terminal utilisateur, à partir de la position de stationnement qu'il a calculé ou qu'on lui a transmise.

Le document US 2018/0021760 A1 divulgue un système comprenant plusieurs véhicules communiquant avec un serveur et permettant un guidage collectif d'un utilisateur vers un véhicule par actionnement commandé des moyens lumineux de certains des véhicules.

L'invention a notamment pour but d'améliorer la situation.

Elle propose notamment à cet effet un procédé destiné à permettre le guidage d'une personne disposant d'un équipement de communication mobile et ayant réservé un véhicule qui est garé en une position de stationnement et qui comprend un module de communication par voie d'ondes et au moins une source de lumière installée à l'extérieur et produisant une lumière de signalement lorsque ce module détecte cet équipement de communication dans son voisinage.

Ce procédé de guidage se caractérise par le fait qu'il comprend une étape dans laquelle, lorsque l'équipement de communication comprend des moyens d'aide à la navigation déterminant sa position en cours, on transmet à cet équipement de communication une définition de la lumière de signalement afin qu'il la fournisse à la personne qui l'utilise et la position de stationnement pour que les moyens d'aide à la navigation de cet équipement de communication fournissent à cette personne des informations permettant de la guider vers le véhicule réservé afin qu'une fois parvenue à proximité de ce dernier elle l'identifie par la lumière de signalement qui est produite par sa source de lumière.

Grâce à ces fournitures de la définition de la lumière de signalement et de la position de stationnement du véhicule réservé, la personne peut être avantageusement guidée vers ce véhicule réservé, et donc n'a plus qu'à identifier (ou repérer) précisément ce dernier lorsqu'elle est à proximité grâce à la lumière de signalement qui est émise par sa (ses) source(s) de lumière.

Le procédé de guidage selon l'invention peut comporter d'autres caractéristiques qui peuvent être prises séparément ou en combinaison, et notamment :
- dans son étape l'équipement de communication peut transmettre au module du véhicule réservé des premières données représentatives d'un numéro de réservation et qu'il a précédemment reçues d'un serveur de réservation, puis le véhicule réservé peut comparer ces premières données à des secondes données qu'il a précédemment reçues du serveur de réservation et qui sont représentatives d'un numéro de réservation, et, en cas d'identité entre ces premières et secondes données, le véhicule réservé peut déclencher la production par la (chaque) source de lumière de la lumière de signalement dont il a reçu la définition du serveur de réservation ;
   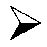 dans son étape le véhicule réservé peut déclencher la production de la lumière de signalement par sa source de lumière lorsqu'en outre l'équipement de communication est détecté à une distance qui est inférieure à un seuil prédéfini ;
- dans son étape un serveur de réservation peut transmettre à l'équipement de communication la définition de la lumière de signalement et la position de stationnement, qu'il a précédemment reçue du module du véhicule réservé. En variante, dans son étape le module du véhicule réservé peut transmettre à l'équipement de communication la position de stationnement, et un serveur de réservation peut transmettre la définition de la lumière de signalement à l'équipement de communication ;
- dans son étape la définition de la lumière de signalement peut comprendre chaque couleur utilisée et un mode de fonctionnement qui est choisi parmi un mode de fonctionnement en continu et un mode de fonctionnement intermittent ;
- dans son étape les moyens d'aide à la navigation peuvent fournir à la personne des instructions orales et/ou textuelles permettant de la guider vers le véhicule réservé. En variante, dans son étape les moyens d'aide à la navigation peuvent déclencher l'affichage sur un écran de l'équipement de communication d'une carte qui matérialise l'environnement, la position de stationnement et les positions en cours successivement déterminées, afin de guider la personne.

L'invention propose également un dispositif de guidage, destiné à permettre le guidage d'une personne, disposant d'un équipement de communication mobile et comportant des moyens d'aide à la navigation déterminant sa position en cours, et ayant réservé un véhicule qui est garé en une position de stationnement et qui comprend un module de communication par voie d'ondes et au moins une source de lumière installée à l'extérieur et produisant une lumière de signalement lorsque ce module détecte cet équipement de communication dans son voisinage.

Ce dispositif de guidage se caractérise par le fait qu'il comprend des moyens de gestion déclenchant la transmission à l'équipement de communication d'une définition de la lumière de signalement afin qu'il la fournisse à la personne et de la position de stationnement pour que les moyens d'aide à la navigation du véhicule réservé l'utilisent comme destination et fournissent à cette personne des informations permettant de la guider vers ce véhicule réservé afin qu'une fois parvenue à proximité de ce dernier elle l'identifie par la lumière de signalement produite par sa source de lumière.

Par exemple, les moyens de gestion peuvent être installés dans un serveur de réservation.

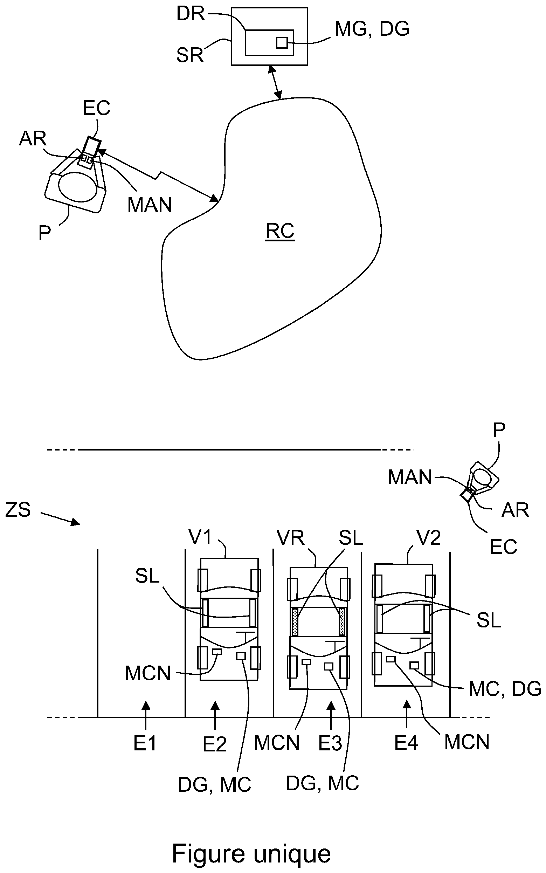

D'autres caractéristiques et avantages de l'invention apparaîtront à l'examen de la description détaillée ci-après, et du dessin annexé, sur lequel l'unique figure illustre schématiquement et fonctionnellement un réseau de communication auquel est couplé un serveur de réservation comprenant une partie d'un dispositif de guidage selon l'invention et auquel a été couplé un équipement de communication d'une personne pendant une phase de réservation d'un véhicule, et un parking comprenant des espaces de stationnement, sur l'un desquels est garé le véhicule réservé que la personne veut récupérer.

L'invention a notamment pour but de proposer un procédé de guidage, et un dispositif de guidage DG associé, destinés à permettre le guidage d'une personne P jusqu'à un véhicule VR qu'elle a réservé et qui est garé en une position de stationnement connue.

Il est rappelé que l'on entend ici par « véhicule réservé » aussi bien un véhicule de location qu'un véhicule partagé.

Par ailleurs, on considère dans ce qui suit, à titre d'exemple non limitatif, que le véhicule réservé VR est de type automobile. Il s'agit par exemple d'une voiture. Mais l'invention n'est pas limitée à ce type de véhicule. Elle concerne en effet tout type de véhicule pouvant être réservé et garé dans une zone de stationnement, et donc non seulement les véhicules terrestres, mais également les véhicules maritimes (ou fluviaux).

De plus, on considère dans ce qui suit, à titre d'exemple non limitatif, que le véhicule réservé VR est un véhicule de location. Mais comme indiqué précédemment, il pourrait s'agir d'un véhicule partagé.

On a schématiquement illustré sur l'unique figure un réseau de communication RC auquel est couplé un serveur de réservation SR, et une zone de stationnement ZS comprenant des espaces de stationnement Ej sur lesquels peuvent stationner des véhicules VR et Vk (ici de type automobile).

On considère dans ce qui suit, à titre d'exemple non limitatif, que la zone de stationnement ZS est un parking, par exemple d'un aéroport ou d'une gare. Mais l'invention n'est pas limitée à ce type de zone de stationnement. Elle concerne en effet tout type de zone de stationnement où des véhicules, notamment réservés, peuvent être temporairement garés.

Dans l'exemple illustré non limitativement sur l'unique figure, la zone de stationnement ZS comprend au moins quatre espaces de stationnement E1 à E4 (j = 1 à 4). Deux de ces espaces de stationnement E2 et E4 sont ici occupés par deux véhicules E1 et E2 (k = 1 ou 2), éventuellement réservés ou réservables, et un autre E3 de ces espaces de stationnement est ici occupé par un véhicule VR qui a été préalablement réservé par une personne P auprès du serveur de réservation SR.

A cet effet, le serveur de réservation SR comprend un dispositif de réservation DR chargé de contrôler les réservations à distance de véhicules initiées par des applications de réservation AR installées, comme illustré, dans des équipements de communication EC, éventuellement mobiles, pouvant éventuellement communiquer par voie d'ondes, et utilisés par des personnes P.

Dans l'exemple illustré non limitativement sur l'unique figure, l'équipement de communication EC est mobile. Il s'agit d'un téléphone mobile de type dit « intelligent » (ou « smartphone »). Mais il pourrait s'agir d'une tablette électronique ou d'un ordinateur portable pouvant au moins communiquer par voie d'ondes.

Lorsqu'une personne P veut réserver à distance un véhicule VR, elle charge l'application de réservation AR installée dans son équipement de communication EC qui peut se connecter, éventuellement par voie d'ondes, au réseau de communication RC. Cette application de réservation AR déclenche l'établissement d'une communication par voie d'ondes entre son équipement de communication EC et le serveur de réservation SR, via au moins le réseau de communication RC. Cette personne P fournit notamment le lieu de récupération du véhicule qu'elle veut réserver, la date de début de réservation de ce véhicule, le lieu de retour de ce véhicule et la date de fin de réservation de ce véhicule. Puis, le dispositif de réservation DR détermine au moins un véhicule parmi un ensemble de véhicules en fonction des informations fournies par la personne P. Si plusieurs véhicules ont été déterminés, la personne P peut choisir l'un d'entre eux, puis finaliser la réservation.

Le dispositif de réservation DR peut alors transmettre à l'équipement de communication EC au moins la marque, le modèle et la couleur de la carrosserie du véhicule VR. Par ailleurs, le dispositif de réservation DR est chargé de déterminer à l'intention exclusive de cette personne P une lumière de signalement qu'émettra le véhicule réservé VR lorsqu'elle sera dans son voisinage, afin de lui faciliter sa recherche. Cette lumière de signalement peut avoir une couleur particulière, éventuellement choisie dans un ensemble de couleurs, et un mode de fonctionnement particulier, par exemple choisi parmi un mode de fonctionnement en continu et un mode de fonctionnement intermittent.

De plus, le dispositif de réservation DR peut déclencher l'envoi à la personne P (à une adresse qu'elle aura fournie) d'un courrier contenant une carte ou un badge électronique destiné(e) à déverrouiller le véhicule réservé VR une fois placé(e) à proximité immédiate de ce dernier (VR). Dans ce cas, le dispositif électronique portable, contrôlant l'accès au véhicule réservé VR, sera logé dans ce dernier (par exemple dans sa boîte à gants).

On notera que la réservation pourrait également se faire au moyen d'un ordinateur fixe, ou bien dans une boutique ou dans un centre de réservation ou encore sur une borne de réservation d'une société de réservation de véhicule.

On notera également qu'afin que l'invention puisse être mise en œuvre, il faut que le véhicule réservé VR comprennent un module MCN de communication par voie d'ondes et au moins une source de lumière SL. Ce module MCN est agencé de manière à échanger des données par voie d'ondes avec le réseau de communication RC et avec des équipements de communication EC mobiles et qui sont temporairement situés dans son voisinage. Il est notamment capable de détecter la présence d'un équipement de communication EC dans son voisinage par échange de données avec ce dernier (EC). Par exemple, ce module MCN peut être à la fois de type 3G ou 4G (pour les communications avec le réseau de communication RC) et de type WiFi ou Bluetooth (pour les communications à courte portée avec les équipements de communication EC voisins).

La (chaque) source de lumière SL est installée à l'extérieur du véhicule réservé VR et agencée de manière à produire une lumière de signalement à l'intention d'une personne P lorsque le module MCN détecte la présence de l'équipement de communication EC (mobile) de cette personne P dans son voisinage (par exemple à une distance inférieure à un seuil prédéfini). Dans l'exemple illustré non limitativement sur l'unique figure, le véhicule réservé VR comprend deux sources de lumière SL installées à l'extérieur sur deux côtés longitudinaux de son toit ou pavillon. Mais il pourrait ne comporter qu'une unique source de lumière SL extérieure ou bien plus de deux sources de lumière SL extérieures. Par ailleurs, une source de lumière SL extérieure peut être installée ailleurs que sur le toit ou pavillon. Mais c'est sur le toit ou pavillon que l'émission de la lumière de signalement a la plus forte probabilité d'être observée à distance par une personne P recherchant un véhicule réservé VR.

Afin d'augmenter le nombre de lumières de signalement différentes pouvant être produites par une source de lumière SL, cette dernière peut, par exemple, comporter plusieurs sous-ensembles comprenant chacun au moins une diode électroluminescente (ou LED) ou laser émettant des photons d'une couleur prédéfinie. On peut ainsi utiliser un seul sous-ensemble ou bien au moins deux sous-ensembles simultanément ou de façon alternée.

On notera également qu'afin que l'invention puisse être mise en œuvre, il faut aussi que l'équipement de communication EC, de la personne P recherchant un véhicule réservé VR, comprenne des moyens d'aide à la navigation MAN agencés de manière à déterminer sa position en cours. De tels moyens d'aide à la navigation MAN peuvent, par exemple, déterminer chaque position en cours en fonction de données transmises par satellites (éventuellement de la constellation GPS). Mais ils pourraient également déterminer chaque position en cours par triangulation de données reçues d'au moins trois équipements de communication d'un réseau de communication (technique bien connue de l'homme de l'art).

Comme indiqué plus haut, l'invention propose notamment de mettre en œuvre un procédé de guidage destiné à permettre le guidage d'une personne P jusqu'à un véhicule VR qu'elle a préalablement réservé et qui est garé en une position de stationnement connue dans une zone de stationnement ZS.

On considère dans ce qui suit, à titre d'exemple non limitatif, que la zone de stationnement ZS est un parking, par exemple d'un aéroport ou d'une gare. Mais l'invention n'est pas limitée à ce type de zone de stationnement. Elle concerne en effet tout type de zone de stationnement où des véhicules, notamment réservés, peuvent être temporairement garés.

La mise en œuvre du procédé de guidage selon l'invention peut se faire au moyen, notamment, d'un dispositif de guidage DG comprenant au moins des moyens de gestion MG. Comme illustré non limitativement sur l'unique figure, les moyens de gestion MG peuvent, par exemple, être installés dans le serveur de réservation SR qui est accessible via au moins le réseau de communication RC (par exemple via l'Internet). Mais cela n'est pas obligatoire. En effet, les moyens de gestion MG pourraient être indépendants du dispositif de réservation DR, tout en étant couplés à ce dernier (DR). Par conséquent, les moyens de gestion MG peuvent être réalisés sous la forme de modules logiciels (ou « software ») ou bien d'une combinaison de circuits ou composants électroniques (ou « hardware ») et de modules logiciels.

Le procédé (de guidage), selon l'invention, comprend une étape qui est déclenchée chaque fois qu'une personne P doit être guidée jusqu'à un véhicule VR qu'elle a réservé et qui est garé en une position de stationnement connue. Ce déclenchement peut, par exemple, résulter des date et horaire de début de réservation d'un véhicule VR par une personne P utilisant un équipement de communication EC comprenant une application de réservation AR. Dans ce cas, le dispositif de guidage DG, qui connait un identifiant de communication de cet équipement de communication EC (comme par exemple son adresse MAC et/ou son numéro de téléphone fourni(e)(s) lors de la réservation), peut, par exemple, déclencher le fonctionnement de cette application de réservation AR. En variante, c'est la personne qui veut récupérer le véhicule réservé VR qui peut déclencher le fonctionnement de cette application de réservation AR, lorsqu'elle arrive à proximité de la zone de stationnement ZS (par exemple en sortant d'un avion ou d'un train).

L'étape du procédé consiste à transmettre à l'équipement de communication EC (de la personne P recherchant son véhicule réservé VR) une définition de la lumière de signalement que la (chaque) source de lumière SL doit émettre à l'intention de la personne P) et la position de stationnement du véhicule réservé VR. Cette transmission est déclenchée par les moyens de gestion MG du dispositif de guidage DG.

La définition de la lumière de signalement est destinée à être fournie par l'équipement de communication EC à la personne P, par exemple sous le contrôle de l'application de réservation AR. A cet effet, elle peut, par exemple, être affichée sur l'écran de l'équipement de communication EC et/ou diffusée par un haut-parleur de l'équipement de communication EC.

Cette définition de la lumière de signalement peut, par exemple, comprendre chaque couleur qui sera utilisée et un mode de fonctionnement qui est choisi parmi un mode de fonctionnement en continu (lumière continument émise) et un mode de fonctionnement intermittent (lumière clignotante).

La position de stationnement du véhicule réservé VR est destinée à être fournie par l'équipement de communication EC aux moyens d'aide à la navigation MAN de ce dernier (EC), par exemple sous le contrôle de l'application de réservation AR, pour qu'ils (MAN) fournissent à la personne P des informations permettant de la guider vers le véhicule réservé VR afin qu'une fois parvenue à proximité de ce dernier (VR) elle l'identifie par la lumière de signalement produite par sa (ses) source(s) de lumière SL.

En d'autres termes, les moyens d'aide à la navigation MAN utilisent à chaque instant la position en cours de leur équipement de communication EC comme point de départ d'un trajet et la position de stationnement du véhicule réservé VR comme destination de ce trajet, et guident la personne P vers cette position de stationnement en lui fournissant des informations de guidage. Ainsi, la personne P peut facilement parvenir à proximité du véhicule réservé VR, puis identifier (ou repérer) précisément ce dernier (VR) grâce à la lumière de signalement dont la définition lui a été fournie et qui est émise par sa (ses) source(s) de lumière SL.

Le déclenchement de la production de la lumière de signalement peut, par exemple, se faire comme indiqué ci-après.

Dans l'étape du procédé l'équipement de communication EC de la personne P peut transmettre au module MCN du véhicule réservé VR des premières données qui sont représentatives d'un numéro de réservation, attribué par les moyens de gestion MG, et qu'il a précédemment reçues du serveur de réservation SR. Puis, le véhicule réservé VR peut comparer ces premières données à des secondes données qu'il a précédemment reçues du serveur de réservation SR et qui sont représentatives d'un numéro de réservation. Cette comparaison peut, par exemple, être réalisée par un module de contrôle MC faisant partie du dispositif de guidage et installé dans le véhicule réservé VR, éventuellement dans un calculateur assurant éventuellement au moins une autre fonction. Enfin, en cas d'identité entre ces premières et secondes données, le véhicule réservé VR (et plus précisément son module de contrôle MC) peut déclencher la production par sa (ses) source(s) de lumière SL de la lumière de signalement dont il a reçu la définition du serveur de réservation SR.

En d'autres termes, les moyens de gestion MG informent le véhicule réservé VR, via leur serveur de réservation SR, du numéro de réservation qu'il va prochainement recevoir d'un équipement de communication EC qui se retrouvera dans son voisinage, et de la définition de la lumière de signalement qu'il devra produire consécutivement à cette réception prochaine. Ainsi, lorsque le véhicule réservé VR reçoit effectivement d'un équipement de communication EC un numéro de réservation identique à celui qui lui a été préalablement fourni, il n'a plus qu'à déclencher la production par sa (ses) source(s) de lumière SL d'une lumière de signalement conforme à la définition qui lui a été préalablement fournie.

On notera qu'en présence de cette dernière option, dans l'étape du procédé le véhicule réservé VR (et plus précisément son module de contrôle MC) peut déclencher la production de la lumière de signalement par sa (ses) source(s) de lumière SL lorsqu'en outre l'équipement de communication EC est détecté par le module MCN à une distance qui est inférieure à un seuil prédéfini. Par exemple, ce seuil peut être compris entre 10 mètres et 30 mètres. A titre d'exemple, ce seuil peut être égal à 20 mètres. On notera que ce seuil peut être éventuellement adaptable en fonction de la dimension du parking ou bien configurable par la personne P.

Le véhicule VR peut déterminer la distance mentionnée dans le paragraphe précédent d'au moins deux façons. Une première façon consiste à utiliser la distance d'accrochage standard du protocole de communication à courte portée utilisé, par exemple Bluetooth. Dans ce cas, dès qu'il y a un accrochage on déclenche la production de la lumière de signalement. Une seconde façon consiste à estimer la distance par triangulation grâce à la présence de balises communicantes (ou « beacons ») implantées en des endroits connus du parking.

On comprendra que cette dernière option permet d'éviter la production de la lumière de signalement lorsque l'équipement de communication EC est assez éloigné du véhicule réservé VR, et donc lorsqu'il y a une forte probabilité qu'elle ne puisse être observée par la personne P et/ou qu'elle ne permette pas l'identification précise du véhicule réservé VR.

De préférence, dans l'étape du procédé, le serveur de réservation SR peut transmettre à l'équipement de communication EC (et plus précisément à l'intention de son application de réservation AR) la définition de la lumière de signalement déterminée par les moyens de gestion MG pour la personne P qui l'utilise, et la position de stationnement du véhicule réservé VR, qu'il a précédemment reçue du module MCN de ce dernier (VR).

En d'autres termes, la position de stationnement du véhicule réservé VR est transmise par le module MCN de ce dernier (VR) au serveur de réservation SR (à l'intention des moyens de gestion MG), et le serveur de réservation SR fournit cette position de stationnement à l'équipement de communication EC concerné avant qu'il ne parvienne à proximité de la zone de stationnement ZS. On notera que la définition de la lumière de signalement et de la position de stationnement ne sont pas forcément transmises simultanément à l'équipement de communication EC concerné. On notera également que la position de stationnement du véhicule réservé VR peut, par exemple, être automatiquement transmise au serveur de réservation SR par ce dernier (VR), à la demande du module de contrôle MC, une fois que la personne précédente qui le rend a fini de le garer (ici sur l'espace de stationnement E3). Mais on peut également envisager que le véhicule réservé VR transmette sa position de stationnement au serveur de réservation SR, à la demande du module de contrôle MC, consécutivement à la réception de la définition de la lumière de signalement qu'il devra prochainement produire.

En variante, dans l'étape du procédé le module MCN du véhicule réservé VR peut transmettre, à la demande du module de contrôle MC, la position de stationnement de ce dernier (VR) à l'équipement de communication EC (par exemple une fois qu'il a détecté ce dernier (EC) dans son voisinage et que ce dernier (EC) lui a transmis des données représentatives d'un numéro de réservation, identiques à celles qu'il a reçues du serveur de réservation SR). Dans ce cas, le serveur de réservation SR n'a qu'à transmettre la définition de la lumière de signalement à l'équipement de communication EC.

On notera que dans l'étape du procédé les moyens d'aide à la navigation MAN peuvent être agencés pour fournir à la personne P des instructions orales et/ou textuelles permettant de la guider vers le véhicule réservé VR. Les instructions orales peuvent être diffusées par un haut-parleur de l'équipement de communication EC. Les instructions textuelles peuvent être affichées sur l'écran de l'équipement de communication EC.

En variante, dans l'étape du procédé les moyens d'aide à la navigation MAN peuvent être agencés pour déclencher l'affichage sur l'écran de leur équipement de communication EC d'une carte qui matérialise l'environnement, la position de stationnement et les positions en cours successivement déterminées afin de guider la personne P.

On notera également que lorsque la zone de stationnement ZS est un parking intérieur fermé, il est avantageux que les moyens d'aide à la navigation MAN disposent de cartes définissant chacun de ses niveaux et que ces derniers soient équipés de balises émettrices/réceptrices (ou « beacons ») de positions connues de manière à permettre aux moyens d'aide à la navigation MAN de déterminer les positions en cours successives de l'équipement de communication EC par rapport à elles.

L'invention offre plusieurs avantages, parmi lesquels :
- la possibilité, par exemple à l'arrivée d'un vol ou d'un train, de guider plusieurs personnes jusqu'à leurs véhicules respectifs, puis que ces personnes puissent identifier précisément ces derniers sans risque de confusion du fait de lumières de signalement différentes,
- la possibilité de laisser le dispositif électronique portable, contrôlant l'accès au véhicule réservé, à l'intérieur de ce dernier, puisque l'identification précise du véhicule se fait par un guidage associé à l'émission d'une lumière de signalement propre à la seule réservation.

## Revendications

1. Procédé de guidage d'une personne disposant d'un équipement de communication (EC) mobile et ayant réservé un véhicule (VR), ledit véhicule étant garé en une position de stationnement et comprenant un module (MCN) de communication par voie d'ondes et au moins une source de lumière (SL) installée à l'extérieur et produisant une lumière de signalement lorsque ledit module (MCN) détecte ledit équipement de communication (EC) dans son voisinage, le procédé étant **caractérisé en ce qu'**il comprend une étape dans laquelle, ledit équipement de communication (EC) comprenant des moyens d'aide à la navigation (MAN) déterminant sa position en cours, on transmet audit équipement de communication (EC) une définition de ladite lumière de signalement afin qu'il la fournisse à ladite personne et ladite position de stationnement pour que lesdits moyens d'aide à la navigation (MAN) fournissent à ladite personne des informations permettant de la guider vers ledit véhicule (VR) afin qu'une fois parvenue à proximité de ce dernier (VR) elle l'identifie par ladite lumière de signalement produite par ladite source de lumière (SL).

2. Procédé selon la revendication 1, **caractérisé en ce que** dans ladite étape ledit équipement de communication (EC) transmet audit module (MCN) des premières données représentatives d'un numéro de réservation et qu'il a précédemment reçues d'un serveur de réservation (SR), puis ledit véhicule (VR) compare ces premières données à des secondes données qu'il a précédemment reçues dudit serveur de réservation (SR) et qui sont représentatives d'un numéro de réservation, et, en cas d'identité entre lesdites premières et secondes données, ledit véhicule (VR) déclenche la production par ladite source de lumière (SL) de ladite lumière de signalement dont il a reçu la définition dudit serveur de réservation (SR).

3. Procédé selon la revendication 2, **caractérisé en ce que** dans ladite étape ledit véhicule (VR) déclenche ladite production de la lumière de signalement par ladite source de lumière (SL) lorsqu'en outre ledit équipement de communication (EC) est détecté à une distance inférieure à un seuil prédéfini.

4. Procédé selon l'une des revendications 1 à 3, **caractérisé en ce que** dans ladite étape un serveur de réservation (SR) transmet audit équipement de communication (EC) ladite définition de la lumière de signalement et ladite position de stationnement, qu'il a précédemment reçue dudit module (MCN).

5. Procédé selon l'une des revendications 1 à 3, **caractérisé en ce que** dans ladite étape ledit module (MCN) transmet ladite position de stationnement audit équipement de communication (EC), et un serveur de réservation (SR) transmet ladite définition de la lumière de signalement audit équipement de communication (EC).

6. Procédé selon l'une des revendications 1 à 5, **caractérisé en ce que** dans ladite étape ladite définition de la lumière de signalement comprend chaque couleur utilisée et un mode de fonctionnement choisi parmi un mode de fonctionnement en continu et un mode de fonctionnement intermittent.

7. Procédé selon l'une des revendications 1 à 6, **caractérisé en ce que** dans ladite étape lesdits moyens d'aide à la navigation (MAN) fournissent à ladite personne des instructions orales et/ou textuelles permettant de la guider vers ledit véhicule (VR).

8. Procédé selon l'une des revendications 1 à 6, **caractérisé en ce que** dans ladite étape lesdits moyens d'aide à la navigation (MAN) déclenchent l'affichage sur un écran dudit équipement de communication (EC) d'une carte matérialisant l'environnement, ladite position de stationnement et lesdites positions en cours successivement déterminées afin de guider ladite personne.

9. Dispositif de guidage (DG) pour guider une personne, disposant d'un équipement de communication (EC) mobile et comportant des moyens d'aide à la navigation (MAN) déterminant sa position en cours, et ayant réservé un véhicule (VR) garé en une position de stationnement et comprenant un module (MCN) de communication par voie d'ondes et au moins une source de lumière (SL) installée à l'extérieur et produisant une lumière de signalement lorsque ledit module (MCN) détecte ledit équipement de communication (EC) dans son voisinage, le dispositif étant **caractérisé en ce qu'**il comprend des moyens de gestion (MG) déclenchant la transmission audit équipement de communication (EC) d'une définition de ladite lumière de signalement afin qu'il la fournisse à ladite personne et de ladite position de stationnement pour que lesdits moyens d'aide à la navigation (MAN) l'utilisent comme destination et fournissent à ladite personne des informations permettant de la guider vers ledit véhicule (VR) afin qu'une fois parvenue à proximité de ce dernier (VR) elle l'identifie par ladite lumière de signalement produite par ladite source de lumière (SL).

10. Dispositif selon la revendication 9, **caractérisé en ce que** lesdits moyens de gestion (MG) sont installés dans un serveur de réservation (SR).

## Patentansprüche

1. Verfahren zum Leiten einer Person, die ein mobiles Kommunikationsgerät (EC) hat und ein Fahrzeug (VR) reserviert hat, wobei das Fahrzeug in einer Parkposition geparkt ist und ein Wellenkommunikationsmodul (MCN) und mindestens eine Lichtquelle (SL) umfasst, die extern installiert ist und ein Signallicht erzeugt, wenn das Modul (MCN) das Kommunikationsgerät (EC) in seiner Nähe erfasst, wobei das Verfahren **dadurch gekennzeichnet ist, dass** es einen Schritt umfasst, bei dem, die Kommunikationseinrichtung (EC) Navigationshilfsmittel (MAN) umfasst, die ihre aktuelle Position bestimmen, eine Definition des Signalisierungslichts an die Kommunikationseinrichtung (EC) übertragen wird, so dass sie es der Person und der Parkposition zur Verfügung stellt, so dass die Navigationshilfsmittel (MAN) die Person mit Informationen versorgen, um sie zu dem Fahrzeug (VR) zu führen, so dass sie, sobald sie in der Nähe des letzteren (VR) angekommen ist, durch das von der Lichtquelle (SL) erzeugte Signalisierungslicht identifiziert wird.

2. Verfahren nach Anspruch 1, **dadurch gekennzeichnet, dass** in diesem Schritt das Kommunikationsgerät (EC) an das Modul (MCN) erste Daten sendet, die eine Reservierungsnummer darstellen und die es zuvor von einem Reservierungsserver (SR) empfangen hat, dann vergleicht das Fahrzeug (VR) diese ersten Daten mit zweiten Daten, die es zuvor von dem Reservierungsserver (SR) erhalten hat und die für eine Reservierungsnummer repräsentativ sind, und im Falle der Identität zwischen den ersten und zweiten Daten löst das Fahrzeug (VR) die Erzeugung des Signallichts durch die Lichtquelle (SL) aus, dessen Definition es von dem Reservierungsserver (SR) erhalten hat.

3. Verfahren nach Anspruch 2, **dadurch gekennzeichnet, dass** in diesem Schritt das Fahrzeug (VR) die Erzeugung des Signalisierungslichts durch die Lichtquelle (SL) auslöst, wenn außerdem die Kommunikationseinrichtung (EC) in einem Abstand unterhalb eines vordefinierten Schwellenwerts erkannt wird.

4. Verfahren nach einem der Ansprüche 1 bis 3, **dadurch gekennzeichnet, dass** in diesem Schritt ein Reservierungsserver (SR) die Definition der Signallampe und der Parkposition, die er zuvor von dem Modul (MCN) erhalten hat, an die Kommunikationseinrichtung (EC) überträgt.

5. Verfahren nach einem der Ansprüche 1 bis 3, **dadurch gekennzeichnet, dass** in diesem Schritt das Modul (MCN) die Parkposition an die Kommunikationseinrichtung (EC) überträgt und ein Reservierungsserver (SR) die Definition der Signalampel an die Kommunikationseinrichtung (EC) überträgt.

6. Verfahren nach einem der Ansprüche 1 bis 5, **dadurch gekennzeichnet, dass** in diesem Schritt die Signallichtdefinition jede verwendete Farbe und eine Betriebsart umfasst, die aus einer kontinuierlichen Betriebsart und einer intermittierenden Betriebsart ausgewählt ist.

7. Verfahren nach einem der Ansprüche 1 bis 6, **dadurch gekennzeichnet, dass** in diesem Schritt die Navigationshilfsmittel (MAN) der Person mündliche und/oder textliche Anweisungen geben, um sie zu dem Fahrzeug (VR) zu führen.

8. Verfahren nach einem der Ansprüche 1 bis 6, **dadurch gekennzeichnet, dass** in diesem Schritt die Navigationshilfsmittel (MAN) die Anzeige einer Karte auf einem Bildschirm des Kommunikationsgeräts (EC) auslösen, die die Umgebung, die Parkposition und die aktuellen Positionen nacheinander bestimmt, um die Person zu führen.

9. Leiteinrichtung (DG) zum Leiten einer Person, die eine mobile Kommunikationseinrichtung (EC) hat und eine Navigationshilfeeinrichtung (MAN) enthält, die ihre aktuelle Position bestimmt, und die ein in einer Parkposition geparktes Fahrzeug (VR) reserviert hat und ein Wellenkanal-Kommunikationsmodul (MCN) und mindestens eine extern installierte Lichtquelle (SL) umfasst, die ein Signallicht erzeugt, wenn das Modul (MCN) die Kommunikationseinrichtung (EC) in seiner Nähe erfasst, wobei die Vorrichtung **dadurch gekennzeichnet ist, dass** sie Verwaltungsmittel (MG) umfasst, die die Übertragung einer Definition des Signalisierungslichts an die Kommunikationseinrichtung (EC) auslösen, damit diese sie der Person und die Parkposition zur Verfügung stellt, damit die Navigationshilfsmittel (MAN) sie als Zielort verwenden und der Person Informationen zur Verfügung stellen, um sie zu dem Fahrzeug (VR) zu führen, so dass sie, sobald sie die Nähe des letzteren (VR) erreicht hat, es durch das von der Lichtquelle (SL) erzeugte Signalisierungslicht identifiziert.

10. Vorrichtung nach Anspruch 9, **dadurch gekennzeichnet, dass** die Verwaltungsmittel (MG) in einem Reservierungsserver (SR) installiert sind.

## Claims

1. Method for guiding a person having mobile communication equipment (EC) and having reserved a vehicle (VR), said vehicle being parked in a parking position and comprising a wave communication module (MCN) and at least one light source (SL) installed externally and producing a signalling light when said module (MCN) detects said communication equipment (EC) in its vicinity, the method being **characterised in that** it comprises a step in which, said communication equipment (EC) comprising navigational aid means (MAN) determining its current position, a definition of said signalling light is transmitted to said communication equipment (EC) so that it provides it to said person and said parking position so that said navigational aid means (MAN) provides said person with information to guide him/her towards said vehicle (VR) so that, once he/she has reached the proximity of the latter (VR), he/she is identified by said signalling light produced by said light source (SL).

2. Method according to claim 1, **characterised in that** in said step said communication equipment (EC) transmits to said module (MCN) first data representative of a reservation number and which it has previously received from a reservation server (SR), then said vehicle (VR) compares these first data with second data which it has previously received from said reservation server (SR) and which are representative of a reservation number, and, in the event of identity between said first and second data, said vehicle (VR) triggers the production by said light source (SL) of said signalling light of which it has received the definition from said reservation server (SR).

3. Method according to claim 2, **characterised in that** in said step said vehicle (VR) triggers said production of the signalling light by said light source (SL) when furthermore said communication equipment (EC) is detected at a distance below a predefined threshold.

4. Method according to one of claims 1 to 3, **characterised in that** in said step a reservation server (SR) transmits to said communication equipment (EC) said definition of the signal light and said parking position, which it has previously received from said module (MCN).

5. Method according to one of claims 1 to 3, **characterised in that** in said step said module (MCN) transmits said parking position to said communication equipment (EC), and a reservation server (SR) transmits said signal light definition to said communication equipment (EC).

6. A method according to one of claims 1 to 5, **characterized in that** in said step said signal light definition comprises each colour used and an operating mode selected from a continuous operating mode and an intermittent operating mode.

7. Method according to one of claims 1 to 6, **characterised in that** in said step said navigational aid means (MAN) provide said person with oral and/or textual instructions to guide him/her towards said vehicle (VR).

8. Method according to one of claims 1 to 6, **characterised in that** in said step said navigation aid means (MAN) trigger the display on a screen of said communication equipment (EC) of a map materialising the environment, said parking position and said current positions successively determined in order to guide said person.

9. A guidance device (DG) for guiding a person, having mobile communication equipment (EC) and including navigation aid means (MAN) determining its current position, and having reserved a vehicle (VR) parked in a parking position and comprising a wave channel communication module (MCN) and at least one light source (SL) installed externally and producing a signalling light when said module (MCN) detects said communication equipment (EC) in its vicinity, the device being **characterised in that** it comprises management means (MG) triggering the transmission to said communication equipment (EC) of a definition of said signalling light so that it provides it to said person and of said parking position so that said navigation aid means (MAN) use it as a destination and provide said person with information to guide him/her towards said vehicle (VR) so that once he/she has reached the proximity of the latter (VR) he/she identifies it by said signalling light produced by said light source (SL).

10. Device according to claim 9, **characterised in that** said management means (MG) are installed in a reservation server (SR).
